(19) **Europäisches Patentamt / European Patent Office / Office européen des brevets**

(11) **EP 4 682 736 A1**

(12) **EUROPEAN PATENT APPLICATION**

(43) Date of publication:
**21.01.2026   Bulletin 2026/04**

(21) Application number: **24189151.4**

(22) Date of filing: **17.07.2024**

(51) International Patent Classification (IPC):
**G06F 16/242** $^{(2019.01)}$      **G06F 16/2452** $^{(2019.01)}$

(52) Cooperative Patent Classification (CPC):
**G06F 16/243; G06F 16/24522**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Deutsche Telekom AG**
**53113 Bonn (DE)**

(72) Inventor: **Wilke, Lukas**
**53639 Königswinter (DE)**

(74) Representative: **2SPL Patentanwälte PartG mbB**
**Landaubogen 3**
**81373 München (DE)**

Remarks:
Claims filed after the date of filing of the application / after the date of receipt of the divisional application (Rule 68(4) EPC).

(54) **SYSTEM, METHOD, AND COMPUTER PROGRAM FOR USING AI TO GENERATE PROPRIETARY QUERY SYNTAX FOR A PROPRIETARY DATA RETRIEVAL SYSTEM**

(57)    Various examples of the present disclosure relate to a system, method, and computer program for retrieving relevant information from a proprietary data retrieval system (401), and to a method and computer program for training or fine-tuning a language model being used for retrieving the relevant information from the proprietary data retrieval system (401). A system (40) for retrieving relevant information from a proprietary data retrieval system (401) comprises one or more processors (44) and one or more interfaces (42), wherein the system (40) is configured to obtain, via an interface, a request of a user for providing information, wherein the request is worded in natural language, provide a prompt as input for a language model, the prompt comprising information on the request, wherein the language model is trained or fine-tuned to output at least one of a query for the proprietary data retrieval system (401) according to a proprietary query syntax of the proprietary data retrieval system (401) and textual information about one or more possible follow-up requests, wherein the language model is trained or fine-tuned based on an information schema of the proprietary data retrieval system (401) and/or wherein the system (40) is configured to obtain information on the information schema based on the request and provide the information on the information schema as input for the language model, if the output of the language model comprises a query, validate the query based on the proprietary query syntax of the proprietary data retrieval system (401) and retrieve information from the proprietary data retrieval system (401) using the query, and provide a response for the user having requested the information, wherein the response comprises, depending on the output of the language model, at least one of a representation of the information retrieved from the proprietary data retrieval system (401) and a representation of the one or more possible follow-up requests.

Fig. 4a

## Description

Various examples of the present disclosure relate to a system, method, and computer program for retrieving relevant information from a proprietary data retrieval system, and to a method and computer program for training or fine-tuning a language model being used generating a query for retrieving the relevant information from the proprietary data retrieval system.

## Background

Legacy computer systems, i.e., computer systems that have been in use for decades, with software that is often directly derived from the software that was originally used to implement the respective computer system, play a pivotal role in various sectors, including airports, train stations, and banks. Due to the critical nature of operations in these environments, legacy systems are deeply integrated into the core functionalities, managing tasks such as scheduling, ticketing, and financial transactions. Airports often rely on these venerable systems for assigning gates to flights and for controlling the flow of people through the airport, while train stations use them to track schedules and manage the complex logistics of rail traffic. The robustness and reliability of these legacy systems have been tried and tested over time, which makes them indispensable despite their age.

In most cases, such legacy computer systems have been implemented many decades ago, using technologies that were custom-built for the respective legacy computer system. Compared to more recently conceived systems, which are often built around industry standard software or popular open-source server components, they often rely on proprietary data formats and protocols for exchanging information. This makes their interoperability with modern systems non-straight forward, as interfaces have to be designed and implemented manually. While this is feasible if the use cases to be supported are limited and well-defined, the effort for implementing a general-purpose interface that supports the entire functionality of the legacy computer system is punitively high.

Machine-learning based language models are sophisticated algorithms designed to understand and generate human language. These models are trained on vast amounts of text data, using deep learning techniques to learn the patterns and structures of language. They can perform a variety of natural language processing (NLP) tasks, such as translation, summarization, sentiment analysis, and text generation. Large Language Models (LLMs) are a specific type of language model characterized by their size, both in terms of the volume of training data and the number of parameters in the model. Parameters are the weights and biases in the neural network that are adjusted during training.

One feature of some types of specialized LLMs is their ability to generate programming code and similar textual data. For example, LLMs can be used to support programmers when writing code (by providing an enhanced autocomplete functionality) or can be prompted to output programming code for implementing some functionality. The code generated by LLMs can also include code for setting up and querying databases, e.g., according to the Structured Query Language (SQL).

To support such functionality, the respective LLMs need to be trained on vast amounts of programming code, including programming code for setting up and querying databases. However, in general, this code relates to self-contained programming examples, in which a database is used that is specific to the respective example. Moreover, in general, this approach is limited to small programming examples and databases with a limited number of tables.

There may be a desire for providing a functionality for accessing a legacy computer system with a lower implementation effort.

## Summary

This objective is addressed by the subject-matter of the independent claims.

Some aspects of the present disclosure relate to a system for retrieving relevant information from a proprietary data retrieval system. The system comprises one or more processors and one or more interfaces. The system is configured to obtain, via an interface, a request of a user for providing information. The request is worded in natural language. The system is configured to provide a prompt as input for a language model, such as a Large Language Model (LLM). The prompt comprises information on the request. The language model is trained or fine-tuned to output at least one of a query for the proprietary data retrieval system according to a proprietary query syntax of the proprietary data retrieval system and textual information about one or more possible follow-up requests. The language model is trained or fine-tuned based on an information schema of the proprietary data retrieval system. Additionally, or alternatively, the system is configured to obtain information on the information schema based on the request and to provide the information on the information schema as input for the language model. The system is configured to, if the output of the language model comprises a query, validate the query based on the proprietary query syntax of the proprietary data retrieval system and retrieve information from the proprietary data retrieval system using the query. The system is configured to provide a response for the user having requested the information. The response comprises, depending on the output of the language model, at least one of a representation of the information retrieved from the proprietary data retrieval system and a representation of the one or more possible follow-up requests. By using a language model that is trained or fine-tuned based on the information schema of the proprietary data retrieval system and/or that is supplied with information on the information schema, data can be retrieved by a user without intimate knowledge of the capabilities and data structures present in the proprietary data retrieval system. This greatly facilitates accessing data hosted by a proprietary data retrieval system, at a low implementation effort, as there is no need for a dedicated interface that covers the entirety of the capabilities and data structures present in the proprietary data retrieval system. In addition, as the language model itself is not retrieving the information from the proprietary data retrieval system and is merely generating the query to retrieve the corresponding information based on the request, the data stored in the proprietary data retrieval system is not seen by the language model, such that the language model can be hosted by a third party without disclosing information stored in the proprietary data retrieval system, thus maintaining the security of the proprietary data retrieval system.

In many cases, legacy computer systems, such as the proprietary data retrieval system, store vast amounts of different kinds of data, of which only a fraction is relevant for the request. Therefore, only a portion of the information schema is relevant for the respective request. If the information on the information schema is provided to the language model (in addition to the request), the effort for generating the query and/or the one or more follow-up requests can be reduced by only providing the portion of the information schema that is relevant for the respective request. To avoid introducing and/or training a separate component that is tasked with selecting this subset of the information schema, the language model may perform this task itself, by outputting a sub-query for retrieving this subset of the information schema on behalf of the language model. In other words, the language model may be trained or fine-tuned to output a sub-query for obtaining the information on the information schema based on the request. The system may be configured to obtain the information on the information schema of the proprietary data retrieval system based on the sub-query. The information on the information schema may comprise a subset of the information schema, with the subset being selected by the language model (using the sub-query) according to the request. This way, only the relevant subset of the information schema is used by the language model, which reduces the computational complexity and memory footprint of providing the query and/or the one or more follow-up requests for the language model.

In general, between subsequent requests, language models are stateless, i.e., information that has previously been input into, or output by, the respective language model during the processing of one request, does not influence subsequent requests. Therefore, to refine the request and/or provide additional information to be used during the processing of the request, the initial prompt may be extended, e.g., by including (all) data input into the language model as part of an extended request (including some back-and-forth, such as the output of the sub-query) into the prompt when following up with additional data for refining and/or extending an existing request. For example, the system may be configured to append the information on the information schema, e.g., as retrieved according to the sub-query, to the prompt for the language model. In some examples, the system may also be configured to append the sub-query to the prompt. For example, information may be included in the prompt according to their chronological order.

In some cases, the language model may provide a query that is invalid, e.g., with a syntax that violates the syntax of the proprietary data retrieval system, or by requesting data that does not exist or that is named differently. In these cases, the prompt may be modified and provided to the language model again, to trigger the language model to output a valid query instead. For example, the system may be configured to modify the prompt for the language model if validation of the query fails, and repeat providing the prompt as input for the language model and validating the query output using the modified prompt. This way, occasional errors of the language model may be corrected with only a low impact on the user, e.g., with only a delay caused by re-generating the output and by re-querying the proprietary data retrieval system.

While the validation of the query is possible as a stand-alone operation, it can also be performed by "trying out" the query provided by the language model. For example, the system may be configured to validate the query by querying the proprietary data retrieval system, with validation being deemed to have failed if the proprietary data retrieval system returns an error message in response to the query. If the validation is deemed to have failed, the system may be configured to modify the prompt based on the error message. This way, the language model may be provided with feedback (e.g., the error message), and thus prompted to provide an improved (i.e., correct) version of the query.

The proposed concept primarily addresses the retrieval of data from legacy computer systems. These legacy computer systems are often unique, in that their software and data structures have been designed specifically for this legacy computer system. Accordingly, the proprietary query syntax may be unique to the proprietary data retrieval system.

Language models are, as the name suggests, capable of processing natural language, and specifically of determining similarities within the prompt given to it and between the prompt and the learned transformations. This property may be leveraged to enable the language model to construct a suitable query for the request at hand. In particular, the information on the information schema may be provided in such a way that the language model can identify the similarities between the request and the relevant subsets of the information schema. For example, the information on the information schema may comprise a textual description of the data stored in the proprietary data retrieval system and of keywords being used to retrieve the data from the proprietary data retrieval system. This way, the language model can identify matches between the request and the textual description of the data and use the similarity to retrieve the right keywords.

In some examples, additional data may be retrieved from third-party data sources. For example, the language model may be trained or fine-tuned to output a sub-query for obtaining information related to the request from one or more additional data sources based on the request. The system may be configured to obtain the information related to the request using the sub-query for obtaining the information related to the request, and to provide the information related to the request as input to the language model, e.g., appended to the prompt. This additional information may provide additional context that allows the language model to provide a more useful output.

In the prompting of language models, one prompting technique is called "one-shot prompting" or "few-shot prompting". In one-shot/few-shot prompting, as part of the prompt, one or more examples are included, to demonstrate to the language model the type of output being desired. This technique may also be used to triggering the language model to provide the desired output, by providing example requests and corresponding queries that are similar to the request of the user. For example, the system may be configured to retrieve, based on the request, information on one or more example requests and corresponding valid queries, and to include the information on the one or more example requests and corresponding valid queries in the prompt for the language model. For example, Retrieval-Augmented Generation (RAG) may be used for obtaining the example requests and corresponding valid queries. This technique may improve the quality of the output of the language model.

In many cases, only answering the requests provided by the user leads to an unsatisfactory outcome. For example, at an airport, if the user asks: "Which gate is my flight to Marbella?", providing the answer "D 12" may be correct, but less useful than providing some additional context. For example, in addition to the gate requested by the user, the walking distance (in minutes), the use of a transportation modality (such as an airport train), whether the gate is already open, the estimated boarding time etc. may be provided as information that is commonly requested alongside the information directly requested by the request to provide a more useful response. For example, the language model may be trained or fine-tuned to output the query such, that, in addition to information directly requested by the request, the query is configured to retrieve information commonly requested alongside the information directly requested by the request. This way, the quality of the response can be improved beyond just the information that is requested by the user, without requiring the user to provide follow-up requests. This reduces the overall computational effort and time required for gathering the relevant information, as the number of requests required can be decreased.

In many cases, users use the response provided by the system to refine their requests and/or to follow up on the information provided by the system. To make sure that follow-up requests are handled in the context of the preceding request(s) provided by the respective user, this context may be stored and re-used in subsequent prompts to establish them as context for the language model. This technique is also denoted "conversation(al) memory". For example, the system may be configured to store the requests, the information retrieved from the proprietary data retrieval system and the textual information on the one or more possible follow-up requests in a memory, and to include the information on previous requests, the information retrieved from the proprietary data retrieval system and the textual information on the one or more possible follow-up requests as additional context in the prompt if the previous request has been issued by the same user having issued the request. This way, the user does not have to specify information that has previously been provided as request or response, making it easier for the user to formulate the request.

In general, the information retrieved from the proprietary data retrieval system may be presented as is. However, to improve the understandability of the response, pre-defined and/or hand-crafted representations may be used that are in a format being expected by the user and/or that in a format that improves the understandability of the response. For example, in an airport context, representations may be used that resemble the representations used at the gates or at the information screens, making it easier for the user to comprehend the response. For example, the system may be configured to select a representation based on the data included in the information retrieved from the proprietary data retrieval system, and to provide the information using the selected representation.

As a running example, use of the system in an airport scenario is used. For example, the proprietary data retrieval system may be a data retrieval system of a flight information system of an airport. Accordingly, the system may be configured to process requests related to the airport. Airport computer systems often rely on proprietary data retrieval systems, which are difficult to access. In addition, in airports, users, such as flight passengers, often have a need for some information that can be provided by the proprietary data retrieval system.

One goal of the proposed concept is to simplify retrieval of information from the proprietary data retrieval system. This can enable laypersons, such as flight passengers, to retrieve relevant information from the proprietary data retrieval system, e.g., using a self-service terminal. For example, the system may be configured to obtain the request and/or to provide the response via a self-service terminal. This way, access to the proprietary data retrieval system can be provided to a large group of users, which may lessen the burden of human service personnel usually being tasked with providing corresponding information using the proprietary data retrieval system.

In some scenarios, the location of the self-service terminals matters for the purpose of providing the response. For example, in an airport context, the location of the self-service terminal is relevant for displaying information on the closest restroom or information on a walking distance (or directions) to a gate. For example, the system may be configured to include information on a location of the self-service terminal in the prompt. The language model may be trained or fine-tuned to output the query and/or the textual information on the one or more follow-up requests based on the location of the self-service terminal. This way, the quality of the response can be improved, in particular in cases where the location of the self-service terminal is relevant for the queries. Moreover, the location of the self-service terminal may be useful for determining whether subsequent requests have been issued by the same user.

To further improve the accessibility of the information, voice input and/or output may be used to obtain the request and/or provide the response. For example, the system may be configured to obtain the request via a voice input interface, and to transcribe the request into a textual representation to obtain the information on the request. Additionally, or alternatively, the system may be configured to provide the response as spoken text.

Some aspects of the present disclosure relate to a corresponding method for retrieving relevant information from a proprietary data retrieval system. The method comprises obtaining a request for providing information of a user. The request is worded in natural language. The method comprises providing a prompt as input for a language model, the prompt comprising information on the request. The language model is trained or fine-tuned to output at least one of a query for the proprietary data retrieval system according to a proprietary query syntax of the proprietary data retrieval system and textual information about one or more possible follow-up requests. The language model is trained or fine-tuned based on an information schema of the proprietary data retrieval system. Additionally, or alternatively, information on the information schema is retrieved based on the request and provided as input for the language model. The method comprises, if the output of the language model comprises a query, validating the query based on the proprietary query syntax of the proprietary data retrieval system and retrieving information from the proprietary data retrieval system using the query. The method comprises providing a response for the user having requested the information. The response comprises, depending on the output of the language model, at least one of a representation of the information retrieved from the proprietary data retrieval system and a representation of the one or more possible follow-up requests.

Examples further provide a corresponding computer program and computer-readable medium. For example, an aspect of the present disclosure relates to a computer program comprising instructions which, when the program is executed by a computer, cause the computer to carry out the above method. Another aspect of the present disclosure relates to a non-transitory, computer-readable medium comprising a program code that, when the program code is executed on a processor, a computer, or a programmable hardware component, causes the processor, computer, or programmable hardware component to perform the above method.

In addition to use of the language model, the present disclosure further provides a method and computer program or computer-readable medium for training or fine-tuning such a language model. The method for training or fine-tuning the language model comprises obtaining a plurality of training samples. Each training sample comprises a prompt as input. The prompt comprises information on a request. Each training sample further comprises at least one of a corresponding query according to a proprietary query syntax of the proprietary data retrieval system and textual information about one or more possible follow-up requests as desired output. The method comprises training or fine-tuning the language model, using the plurality of training samples, to output at least one of a query for the proprietary data retrieval system according to the proprietary query syntax of the proprietary data retrieval system and textual information about one or more possible follow-up requests. For example, this language model may be used by the system, method, and computer program/-computer-readable medium for retrieving relevant information from the proprietary data retrieval system.

In general, language models can serve a wide variety of different requests, in a wide variety of different contexts. To restrict the language model to a given context, information on the purpose of the language model, and thus the context, to which the request relates, can be provided to the language model as a system prompt that is part of the prompt. For example, the prompt may comprise a system prompt portion (defining the purpose of the language model) and a request-related portion (comprising the request). This may improve the quality of the output of the language model.

As outlined in connection with the use of the language model, in some implementations, information on the information schema may be provided as input (e.g., appended to the prompt) for the language model. This technique may also be used during training, to train the language model to make use of the information on the information schema. For example, at least a subset of the training samples may comprise information on an information schema of the proprietary data retrieval system. For example, the information on the information schema being based on the request included in the respective training sample. This way, the language model may be provided with hints about relevant keywords, tables, etc. that are deemed relevant for the request.

In some cases, the language model may be trained or fine-tuned to request ancillary information, such as the information on an information schema and/or information related to the request to be retrieved one or more additional data sources, by having the model output a sub-query for retrieving this information. In other words, the language model may be trained or fine-tuned to output a sub-query for obtaining at least one of information on an information schema of the proprietary data retrieval system from an information schema data source and information related to the request from one or more additional data sources based on the request. This sub-query may be used, by the system or by the language model itself, to retrieve the respective ancillary information.

In general, the training of fine-tuning of the language model has the purpose of adjusting the language model in a way that improves its capabilities of handling requests for generating corresponding queries for retrieving information from the proprietary data retrieval system. In many cases, proprietary data retrieval systems are used in very specific contexts and domains, such as airports, public transportation systems, production plants etc. To improve the quality of the output of the language model, the requests included in the training data may represent the domain associated with the proprietary data retrieval system. For example, the plurality of training samples may represent domain-specific knowledge associated with the types of requests expected to be processed by the language model.

There are various proxies for measuring the quality of the output generated by the language model. One proxy is whether the query output generated by the language model is valid (i.e., according to the proprietary query syntax). Another proxy is whether the query is suitable for retrieving (all of) the relevant information. A third proxy is whether the language model has provided appropriate follow-up request(s). These proxies may be used during the training or fine-tuning of the language model as part of the loss function being used for the training. Accordingly, a loss function being used for training of fine-tuning the language model may be based on at least one of the query output by the language model being a valid query, the information being retrieved using the query comprising information conforming to the respective request, and the one or more possible follow-up questions being related to the request.

As discussed above, in many cases, the user benefits from being provided with additional information in addition to the information the user has specifically asked for. Therefore, at least some training samples may comprise, as desired output, a query being configured to retrieve, in addition to information directly requested by the respective request, information commonly requested alongside the information directly requested by the request.

Examples further provide a corresponding computer program and computer-readable medium. For example, an aspect of the present disclosure relates to a computer program comprising instructions which, when the program is executed by a computer, cause the computer to carry out the above method. Another aspect of the present disclosure relates to a non-transitory, computer-readable medium comprising a program code that, when the program code is executed on a processor, a computer, or a programmable hardware component, causes the processor, computer, or programmable hardware component to perform the above method. Another aspect relates to a system, such as a computer system, comprising one or more processors (and in particular one or more graphics processors), one or more storage devices, and, optionally, one or more interfaces, with the system being configured to perform the above method.

**Brief Description of the Drawings**

There are several ways how to design and further develop the teaching of the present disclosure an advantageous way. To this end, it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing

Fig. 1     shows a general architecture of a flight information display system;

Fig. 2     shows a logical software architecture associated with a flight information display system;

Fig. 3     shows an example comparison between a query according to a query language of a flight information display system and a corresponding query according to the Structured Query Language (SQL);

Fig. 4a    shows a block diagram of an example of a system for retrieving relevant information from a proprietary data retrieval system;

Fig. 4b    shows a flow chart of an example of a method for retrieving relevant information from a proprietary data retrieval system;

Fig. 5     shows an example of a sequence diagram for retrieving relevant information from a proprietary data retrieval system; and

Fig. 6     shows a flow chart of an example of a method for training or fine-tuning a language model.

**Detailed Description**

Various examples of the present disclosure relate to use of a trained and/or fine-tuned for domain specific code generation for retrieving information from a proprietary data retrieval system, such as a flight information system. In the following a flight information display system (FIDS) is used as running example, i.e., a computer system for handling data at an airport. However, the concept can also be applied to other proprietary data retrieval systems, such as a proprietary data retrieval system of a public transportation system, a proprietary data retrieval system of a train station, a proprietary data retrieval system of a manufacturing plant, a proprietary data retrieval system of a library etc.

A Flight Information Display System is one system being used at an airport. It stands alongside other systems, such as an airport operational database, a resource management system, a ground handling management system, or an airport information platform. The aforementioned systems are supported by supporting systems, such as an aeronautical billing system, a collaborative decision-making platform, an airfield monitoring system, a smart terminal/building system, a forecasting and analytics system, a passenger flow and queue management system, a dashboard (for displaying real-time information) and a slot allocation management system. These systems may be combined with systems for situational awareness and smart decision making, safety management and airside reporting, airport compliance management, real-time construction and maintenance management and workflow management and decision support.

In the context of an airport, different information systems are used, such as the aforementioned FIDS, which is the key system for passenger and staff information and wayfinding, a teletext/internet system (with separate interfaces for teletext and internet), an advertising system (for static, inflexible and expensive advertising) and a television news system (displayed on separate television and control systems). In some implementations, the FIDS is extended to cover information (as core competency, providing relating passenger and staff information using modern and flexible design) as well as the internet (with real-time pages direct in the internet supported out of the box, which can be used to distribute real-time information), commercials (with full or partial usage of displays for advertising purposes, including planning, logging and invoicing) and passenger experience (by providing television-/video streams or clips, news or HTML (HyperText Markup Language) via FIDS displays, thereby creating a system to cover all use cases.

For example, a FIDS may provide one solution for all types of displays, e.g., for public and/or staff display banks. It may feature a user-independent, rule-based operation. It may provide web-based public/staff Information, gate, counter & baggage information and advertising. It may be implemented in a vendor-independent way regarding controllers, displays, servers and/or databases and may thus use common-off-the-shelf equipment, thereby reducing the total cost of ownership (TCO). For example, a FIDS may enable easy online design using graphical layout editor and may provide a cost effective and future proof system due to high scalability and multiple usages, with simple maintenance by a centralized online configuration and monitoring and management of devices.

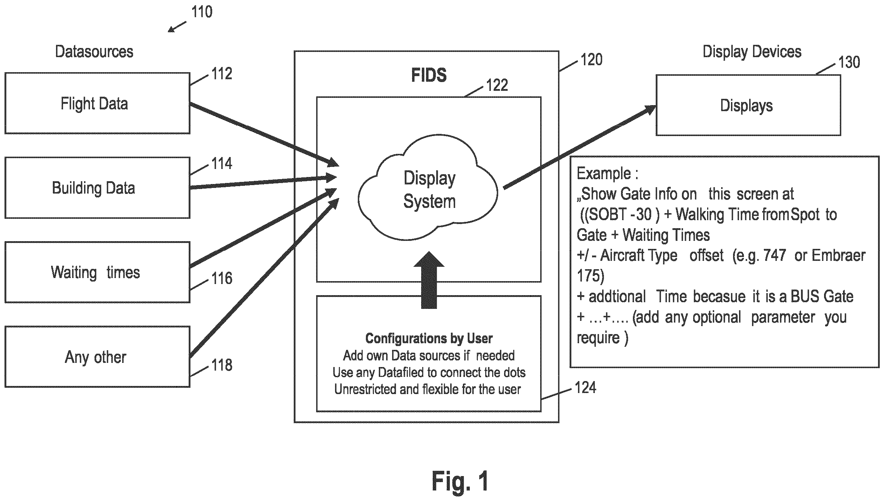

Fig. 1 shows a general architecture of a flight information display system. On the left of Fig. 1, the data sources 110 are shown, including flight data 112, building data 114, waiting times 116 and any other data 118. Data from data sources 110 is provided to a display system 122 of the FIDS 120. In addition, configurations 124 provided by a user may be used to add own data sources if needed. Any data field may be used to connect the dots. The configuration system is unrestricted and flexible for the user. The display system 122 provides information to the displays 130 serving as display devices. On the right, an example on which information can be used as part of the display system 122 is shown:

"Show Gate Info of this screen at ((Scheduled Off Block Time -30 ) + Walking Time from Spot to Gate + Waiting Times +/- Aircraft Type offset (e.g. 747 or Embraer 175) + additional time because it is a BUS Gate + ...+.... (add any optional parameter you requite)"

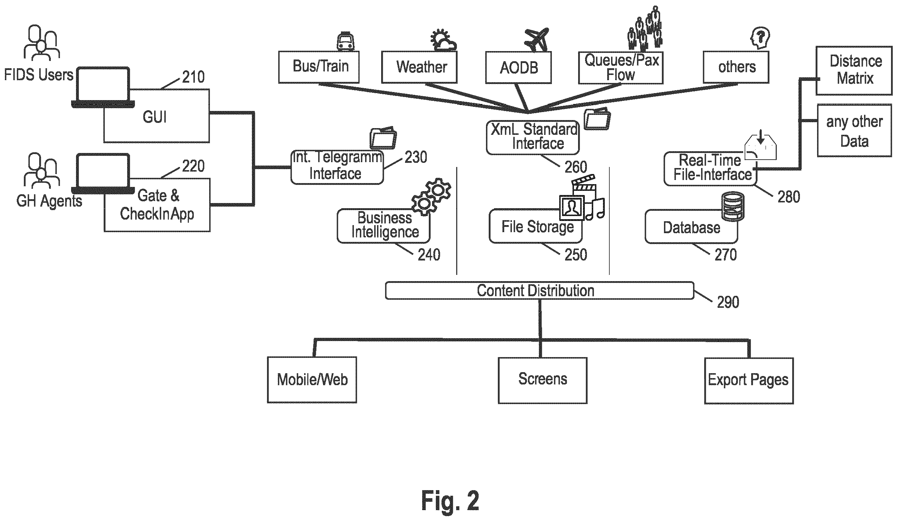

Fig. 2 shows a logical software architecture associated with the flight information display system. On the left, the operators/users of the flight information display system are shown, which may include FIDS users that control the system via a Graphical User Interface (GUI) 210 and airport Ground Handling (GH) agents that control the system via the computer system at the gate and via a check-in app 220. Both the GUI 210 and the computer system/check-in app control the system via an internal interface 230. The system further includes business intelligence 240, an XML (Xtensible Markup Language) interface 260 (for connecting to bus/train data, weather data, an Airport Operational Database (AODB), a queue/person flow and other data sources), a file storage 250, a database 270, a real-time file interface 280 (for connecting to a distance matrix or any other data), and a content distribution interface (for providing information to various display devices, e.g., via mobile/web, screens or export pages).

Various examples of the present disclosure seek to provide additional functionalities/modules for a legacy computer system, such as the FIDS, using generative artificial intelligence features. In general, the FIDS's flexibility and power stem from its business rule engine, which extracts data from diverse sources and displays it on pages. Each page/layout can have customized rules/queries to fetch and transfer data to the controller for page construction.

However, mastering the complex syntax of these rules demands significant time, even for IT (Information Technology)-savvy users. Non-technical users find it challenging to learn on the fly or from scratch. Moreover, with shrinking IT resources at customer sites like airports, creating and defining pages becomes an escalating challenge and pain point.

The proposed concept leverages the Business Rule Syntax Knowledge into a Large Language Model (LLM) for generating accurate rules via free text or speech input (e.g., utilizing a separate model for Speech-to-Text conversion).

This serves two key use cases of empowering airport staff to create layouts/pages efficiently, and enabling fully automated help desks at terminals, allowing passengers to interact, e.g., through speech, with the help desk.

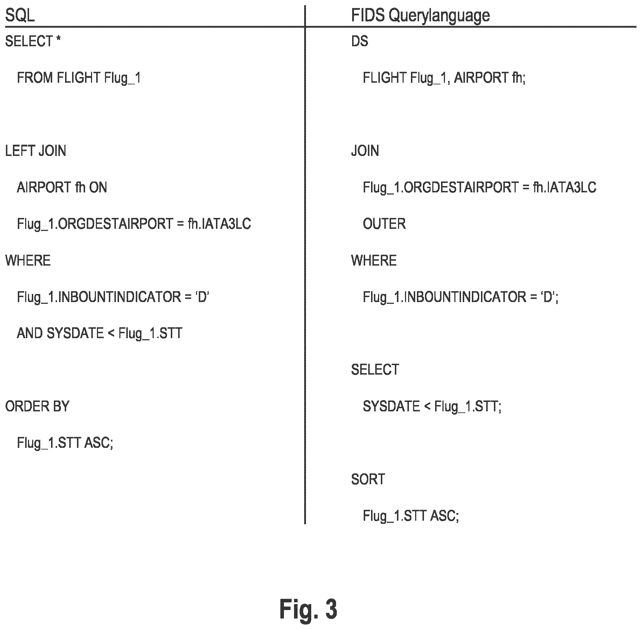

The FIDS Business Rule/Query language is not reliant on standard Query Languages such as SQL. Instead, it is an in-house development tailored to meet the specific demands of the FIDS. This approach ensures greater precision and flexibility in accommodating evolving requirements and expanding the language's capabilities. Fig. 3 shows an example comparison between a query according to a query language of a flight information display system and a corresponding query according to the Structured Query Language (SQL). It is evident that, while some of the query statements are similar, many others are not, in particular JOIN statements, which have a completely different structure in the two query languages shown in Fig. 3.

Hence, there are no off-the-shelf models available for plug-and-play integration, given the absence of familiarity with the domain-specific code/query language. Consequently, existing models might only serve as a foundation and undergo fine-tuning and Retrieval Augmented Generation (RAG) to function effectively as a Knowledge Base for addressing the desired functionality.

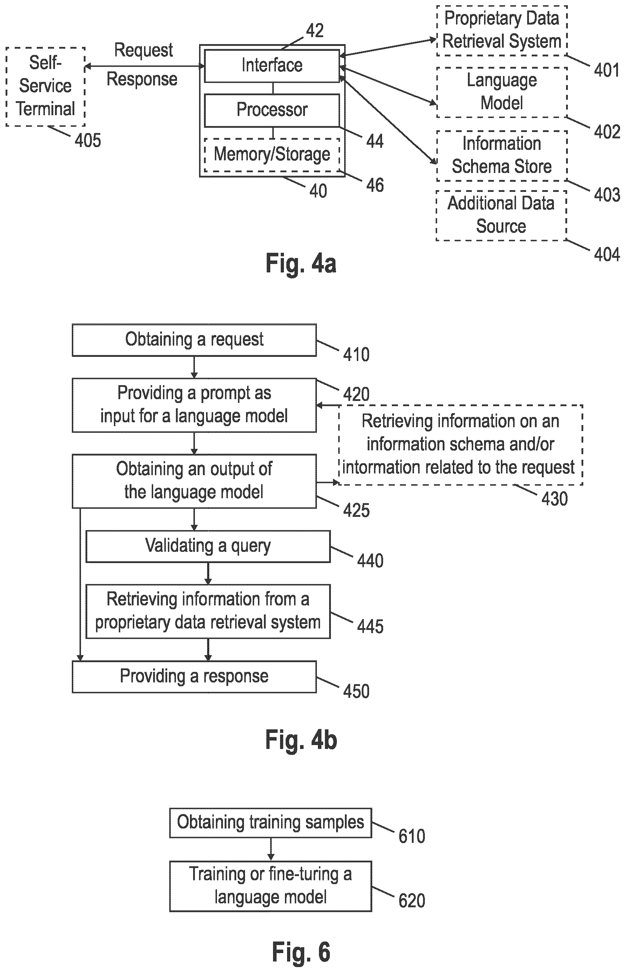

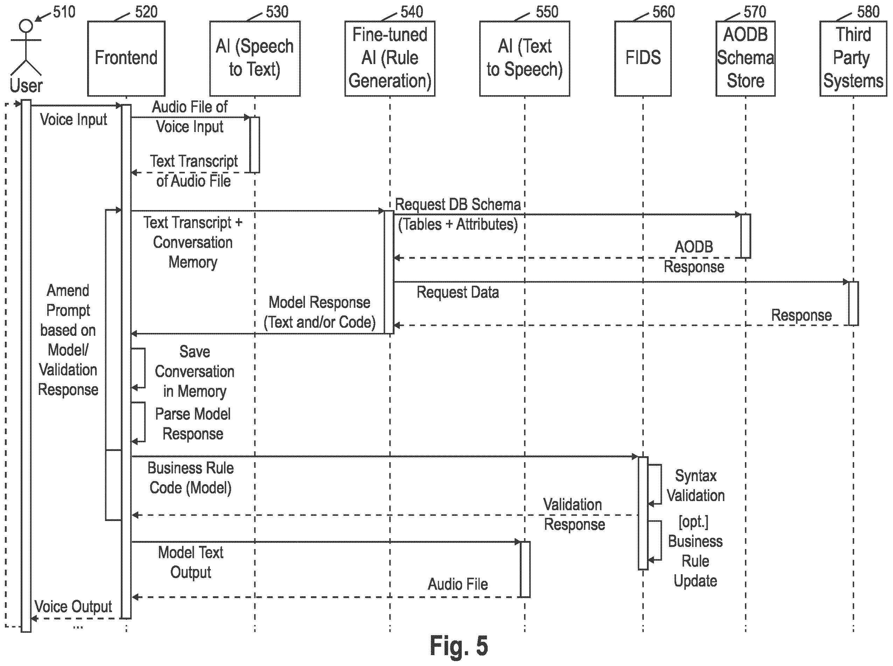

In Figs. 4a and 4b, a system and method are presented that employ a language model, such as an LLM, to query a proprietary data retrieval system, such as the FIDS (and data sources backing the FIDS, such as the bus/train data, weather data, AODB, queues/persons flow etc.), and provide information for a user. Fig. 5 shows an example sequence chart of how such a query process can be implemented. In connection with Fig. 6, a method for training or fine-tuning such a language model is presented.

Fig. 4a shows a block diagram of an example of a (computer) system 40 for retrieving relevant information from a proprietary data retrieval system 401, such as the FIDS. The system 40 comprises one or more processors 44 and one or more interfaces 42. Optionally, the system 40 further comprises one or more storage devices 46. The one or more processors 44 are coupled with the one or more interfaces 42 and with the optional one or more storage devices 46. For example, the one or more processors 44 may be configured to provide the functionality of the system 40, e.g., in conjunction with the one or more interfaces 42 (e.g., for exchanging data with one or more separate entities (as shown in Fig. 5), such as a self-service terminal 405, a server 540 hosting a language model 402, a server 530 hosting a speech-to-text model, a server 550 hosting a text-to-speech model, the proprietary data retrieval system 401/560, a server 570 for providing an information schema of the proprietary data retrieval system 401 and/or one or more third-party systems 580) and with the optional one or more storage devices 46 (for storing data, such as machine-readable instructions, a conversation memory for the language model 402, audio files of a request and/or response etc.). In general, the system 40 may be a computer system. Thus, the functionality of the system 40 may be provided by the one or more processors 44 executing machine-readable instructions, e.g., the machine-readable instructions stored in the optional storage circuitry 46. For example, the one or more interfaces 42 may include or correspond to a network interface circuitry and/or a device interface circuitry configured to be communicatively coupled to one or more other devices. For example, the one or more interfaces 42 may include a transmitter, a receiver, or a combination thereof (e.g., a transceiver), and may enable wired communication, wireless communication, or a combination thereof. For example, the one or more processors 44 may include or correspond to a digital signal processor circuitry (DSP), a graphical processing unit (GPU), and/or a central processing unit (CPU). The one or more storage devices 46 may include instructions (e.g., executable instructions), such as computer-readable instructions or processor circuitry-readable instructions. The instructions may include one or more instructions that are executable by a computer, such as by the one or more processors 44. For example, the one or more storage devices 46 may include or correspond to volatile or nonvolatile storage circuitry, such as Random Access Memory (RAM), magnetic disks, optical disks, or flash memory devices. The one or more storage devices 46 may include both removable and non-removable memory or storage devices.

The system 40 is configured to obtain, via an interface a request of a user for providing information. The request is worded in natural language. The system 40 is configured to provide a prompt as input for a language model 402. The prompt comprises information on the request. The language model 402 is trained or fine-tuned to output at least one of a query for the proprietary data retrieval system 401 according to a proprietary query syntax of the proprietary data retrieval system 401 and textual information about one or more possible follow-up requests. For example, the language model 402 may be trained or fine-tuned based on an information schema of the proprietary data retrieval system 401. Additionally, or alternatively, the system 40 may be configured to obtain information on the information schema based on the request (e.g., from an information schema store 403) and provide the information on the information schema as input for the language model 402. The system 40 is configured to, if the output of the language model 402 comprises a query, validate the query based on the proprietary query syntax of the proprietary data retrieval system 401 and retrieve information from the proprietary data retrieval system 401 using the query. The system 40 is configured to and provide a response for the user having requested the information. The response comprises, depending on the output of the language model 402, at least one of a representation of the information retrieved from the proprietary data retrieval system 401 and a representation of the one or more possible follow-up requests.

Fig. 4b shows a flow chart of an example of a corresponding method for retrieving relevant information from a proprietary data retrieval system 401. As will become evident in the following, the method of Fig. 4b matches the functionality of the system 40 described above. Therefore, functionality discussed in connection with the system 40 may likewise be included in the corresponding method of Fig. 4b.

The method comprises obtaining 410 the request for providing information of a user, wherein the request is worded in natural language. The method comprises providing 420 the prompt as input for the language model 402. The prompt comprises the information on the request. The language model 402 is trained or fine-tuned to output at least one of the query for the proprietary data retrieval system 401 according to a proprietary query syntax of the proprietary data retrieval system 401 and textual information about one or more possible follow-up requests. For example, the language model 402 is trained based on the information schema of the proprietary data retrieval system 401. Additionally, or alternatively, information on the information schema may be retrieved 430 based on the request (e.g., from an information schema store 403) and provided as input for the language model 402. The method comprises, if the output of the language model 402 comprises a query, validating 440 the query based on the proprietary query syntax of the proprietary data retrieval system 401 and retrieving 445 information from the proprietary data retrieval system 401 using the query. The method comprises providing 450 the response for the user having requested the information. The response comprises, depending on the output of the language model 402, at least one of the representation of the information retrieved from the proprietary data retrieval system 401 and the representation of the one or more possible follow-up requests.

The system 40 of Fig. 4a and the corresponding method of Fig. 4b will now be described in more detail in connection with the sequence diagram of Fig. 5. It will be appreciated that the sequence diagram of Fig. 5 includes some optional features.

Fig. 5 shows an example of a sequence diagram for retrieving relevant information from a proprietary data retrieval system. In Fig. 5, the following entities are shown: a user 510, a frontend 520, an AI (Artificial Intelligence) server/service 530 offering a speech-to-text service, a fine-tuned AI server/service 540 for rule generation (i.e., the language model 402), an AI server/service 550 offering a text-to-speech service, the FIDS 560, an AODB schema store 570, and third-party systems 580. In the context of Fig. 5, the system 40 of Fig. 4a may correspond to, or be included in, the frontend 520, which may be a self-service terminal. Alternatively, the system 40 may be communicatively coupled with the self-service terminal 405, e.g., via a computer network. In particular, one system 40 may serve multiple self-service terminals 405.

As is evident from Fig. 5, the example given relates to retrieval of information in the context of an airport. In other words, in the running example, the proprietary data retrieval system 401 is a data retrieval system of a flight information system of an airport. Accordingly, the system 40 may be configured to process requests related to the airport. In an airport, the system 40 may be used as part of self-service terminals 405 or by ground handling agents. In both cases, the information being retrieved is possibly location dependent. For example, if the user enquires about the distance to the gate of their flight, the location of the respective self-service terminal 405 is of utmost relevance. Similarly, if the ground handling agent requests to generate information on connecting flights, weather etc. at the destination, the gate at which the ground handling agent operates can be used to look up the destination. Thus, the system 40 may be configured to include information on a location of the self-service terminal 405 or display device being used to output the response (e.g., at the gate) in the prompt, and the language model 402 may be trained or fine-tuned to output the query and/or the textual information on the one or more follow-up requests based on the location of the self-service terminal 405.

In the sequence diagram shown in Fig. 5, the process starts with the user 510 providing a voice input for the frontend 520. For example, the voice input may correspond to the request being provided to the system 40. The system 40 is configured to obtain the request via an interface, which may be an interface for communicating with a self-service terminal 405, a web interface (e.g., a web server or application programming interface), a user interface if the system 40 is part of a self-service terminal 405 or other user-accessible computer system), a voice interface etc. In the example of Fig. 5, the request is obtained via a voice input interface. For example, the self-service terminal 405 may include a microphone and a sound recording functionality and may provide the request as audio file to the system 40. Alternatively, the system 40 may be coupled with a microphone and may be configured to generate the audio file of the voice input comprising the request. In the following, a textual representation of the request is used. Accordingly, the system 40 may be configured to transcribe the request into a textual representation to obtain the information on the request, e.g., using a local audio transcription machine-learning model. Alternatively, as shown in Fig. 5, the system 40 may be configured to transcribe the request by providing the audio file to an AI server/service 530 for providing the speech-to-text service and obtain a text transcript of the audio file from the AI server/service 530. As a further alternative, the request may be obtained as text, e.g., input via a physical or on-screen keyboard of a computer system, such as the self-service terminal 405, a desktop or laptop computer, or a mobile device, such as a smartphone or tablet computer, and/or via a web interface.

The request is worded in natural language. In other words, the request does not adhere to a query language, such as the proprietary query syntax of the proprietary data retrieval system 401. For example, the request may include a question, such as "Which gate do I need to go to for the Lufthansa flight to Copenhagen", or a command, such as "Show me the trains and buses departing after the Lufthansa flight from Copenhagen has landed" or "Show me the restaurants around my departure gate for the flight to Copenhagen".

The system 40 is configured to provide a prompt as input for a language model 402. In Fig. 5, this is shown by the arrow between the frontend 520 and the fine-tuned AI 540 (hosting the language model 402). In the context of a language model, a prompt is an input provided to the model to generate a response. The prompt usually comprises textual information, such as text, questions, commands, or contextual data, all of which guide the language model in generating the most relevant and coherent output. In the present case, the prompt includes the request (as text/command). The prompt may include additional information that provides context to the request. In particular, the prompt may include a system prompt portion, in which the language model is instructed to perform a certain task (generate the query and/or follow-up questions, output a sub-query if additional information is required etc.), which may be prepended to the request. For example, in the FIDS example, a suitable system prompt is "You are an AI assistant named QueryBot, an expert in generating Retrieval and Querying Syntax code for the Flight Information Display System (FIDS) at an airport." For example, the same system prompt may be used during training and/or fine-tuning of the language model 402. The system prompt portion may be followed by the request, e.g., using keywords to delineate the portions of the prompt, such as: "<system>.... <user/human>..." etc.

The prompt is then provided as input for the language model 402. In the context of the present disclosure, the term "language model" is used to refer to generate language models, such as transformer-based language models. In other words, the language model 402 may be a generative language model and/or a transformer-based language model, such as a Large Language Model. A generative language model is a type of machine-learning system designed to generate human-like text based on an input. It works by predicting and producing sequences of words, sentences, or longer passages that are coherent and contextually appropriate. Generative models can be used for a variety of tasks including text completion, summarization, translation, and text transformation. A transformer language model is a specific type of neural network architecture introduced by Vaswani et al. in 2017, which has become the foundation for many powerful language models. In some examples, the language model 402 may be hosted by the system 40, i.e., inference on the language model 402 may be performed locally by the system 40. In some other examples, the language model 402 may be hosted by a remote server, such as fine-tuned AI server/service 540 in Fig. 5, and be accessed via an application programming interface, e.g., via the internet.

The language model 402 is trained or fine-tuned to output at least one of a query for the proprietary data retrieval system 401 according to a proprietary query syntax of the proprietary data retrieval system 401 and textual information about one or more possible follow-up requests. To give an example: For the request "My airline is Delta", the prompt may comprise the system prompt and the request, denoted by the respective tags "<system>" and "<user/human>". The language model 402 may be trained or fine-tuned to output "DS PL_DEPARTURE DEP; SELECT DEP.PD_DISPLAYCODE = "P" AND DEP.PD_RAL_AIRLINE = "DL"; SORT DEP.PD_SOBT ASC" as query, and """ Would you like to know more about one of them? If so, please provide me with an identifier like the flight number or destination. """ as follow-up question. For example, at least one of the query and follow-up question may be nested inside special characters (""" in the present case), so they can be separated when parsing the output of the language model 402. In some examples, e.g., if the request is for a concrete piece of information (e.g., "What is the gate and departure time for the Lufthansa flight to Copenhagen?"), the output of the language model 402 might only contain the query, without follow-up questions. In some examples, e.g., if the language model 402 is unable to generate a query due to the question being too vague/ambitious, the output might only include one or more follow-up questions ("Can you provide more details?", "Which flights do you want to know something about?). In many cases, both the query and the one or more follow-up questions may be output by the language model 402. The behavior of the model may be determined by the training and/or fine-tuning of the language model 402, as will be discussed in connection with Fig. 6.

Goal of the use of the language model 402 is to generate valid query code for querying the proprietary data retrieval system 401. For this, the language model 402 is trained based on the proprietary query syntax, which may be unique to the proprietary data retrieval system 401. However, not only the syntax may be unique to the proprietary data retrieval system 401, but also the data that is accessible via the proprietary data retrieval system 401. For example, as shown in Fig. 2, the proprietary data retrieval system 401 may be used to access various types of data, such as train/bus data, weather data, airport operational data etc. Availability of data may also change over time, in particular data being provided by third-party sources, such as train/bus data, weather data etc. To access the data, the language model 402 may be familiar with the information schema of the proprietary data retrieval system 401.

In general, an information schema is a system catalog or a collection of views and tables within a database or data retrieval system that contains metadata about the structure and objects of the database or data retrieval system. This may include information about tables (table names, columns, data types, constraints etc.), views (definitions, structures), data sources, indexes, sequences, custom functions etc. In the present case, the language model 402 may be trained or fine-tuned based on an information schema of the proprietary data retrieval system 401. In other words, during training or fine-tuning, the language model 402 may be presented with a large number of training samples comprising example queries representing the information schema of the proprietary data retrieval system 401. In addition to the "raw" information schema, the language model 402 may be trained based on additional information on the information schema, i.e., based on information on the information scheme. For example, the information on the information schema may comprise a textual description of the data stored in the proprietary data retrieval system 401 and of keywords being used to retrieve the data from the proprietary data retrieval system 401. This additional information may help the language model 402 comprehend the content of the proprietary data retrieval system 401 and may help the language model 402 to link the request to the information accessible via the proprietary data retrieval system 401. Thus, the language model 402 may be trained or fine-tuned to provide a subset of the information schema that is relevant with respect to the request, and that is used to formulate the query.

In many cases, the information on the information schema may be too large or too complex to be fully learned by the language model 402 (due to limitations in the training process, as the large amount of available data is difficult to fully represent in a limited number of training samples). Therefore, the language model 402 may be provided with subsets of the information schema based on the request. In Fig. 5, this process is represented by the fine-tuned AI 540 requesting the database (DB) schema (tables and attributes) from the AODB schema store 570. In practice, at least two implementations can be used to achieve this. In both implementations, the fine-tuned AI 540 processes the request, and decides that it requires a subset of the information schema. To obtain this subset of the information schema, the language model 402 may be trained or fine-tuned to generate a sub-query for retrieving this subset of information schema from the information schema store 403, such as the AODB schema store 570. In other words, the language model 402 may be trained or fine-tuned to output a sub-query for obtaining the information on the information schema (e.g., from an information schema store 403) based on the request. In the first implementation shown in Fig. 5, this sub-query may be used by the server/service hosting the language model 402, to request the information on the information schema from the information schema store 403 providing the information on the information schema. In a second implementation, the language model 402 may provide the sub-query to the system 40, which uses the provided sub-query to retrieve the information on the information schema from the information source, and to provide the information on the information schema to the language model 402, e.g., as part of the prompt (as will be outlined in the following). In other words, the system 40 may be configured to obtain information on the information schema based on the request, and in particular based on the sub-query generated by the language model 402 in response to the request and provide the information on the information schema as input for the language model 402, e.g., by appending the information on the information schema to the prompt. In both implementations, the information on the information schema may comprise a subset of the information schema, with the subset being selected by the language model 402 according to the request.

In practice, the process of using the language model 402 to generate the query and/or follow-up questions is not always a single operation. As is evident from the above description, the prompt may be extended during this process. In the context of a language model 402, this can be achieved by using a technique called "conversation memory". Language models do not have a memory in the conventional sense but can retain context across different inputs by retaining a conversation memory or conversation history. This is achieved by including a (chronological) history of previous prompts in the current prompt being input into the language model 402. For example, in the proposed concept, the initial prompt may include the system prompt and the request. The language model 402 may process the initial prompt, and provide, as output, a sub-query for retrieving the information on the information schema. The system 40 may be configured to process the output, determine, that the output does not include the query or follow-up question(s), and use the sub-query to retrieve the information on the information schema. Then, the system 40 may append the information on the information schema (and optionally the output of the language model 402 (i.e., the sub-query)) to the initial prompt, and provide the resulting extended prompt as input to the language model 402. The language model 402 can then use the information on the information schema included in the extended prompt to generate the query and/or follow-up questions. For example, the technique of Retrieval Augmented Generation may be used to retrieve the relevant subset of the information schema. For this purpose, the language model 402 may generate an embedding of the request and provide the embedding as part of the sub-query. The embedding may then be used to obtain the relevant subset of the information schema from a vector database that allows retrieving the information based on a similarity of the embedding to embeddings of subsets of the information schema stored in the vector database.

The same technique can be used to request information from arbitrary additional data sources 404, such as the third-party systems 580 shown in Fig. 5. Again, the language model 402 may be trained or fine-tuned to output a sub-query for obtaining information related to the request from one or more additional data sources 404 based on the request. This sub-query may be used, as shown in Fig. 5, by the server/service hosting the language model 402 to retrieve the information related to the request from the one or more additional data sources 404. Alternatively, the sub-query may be output to the system 40, and the system 40 may be configured to obtain the information related to the request using the sub-query for obtaining the information related to the request, and to provide the information related to the request as input to the language model 402, by appending the information related to the request to the prompt (e.g., in addition to the sub-query). Again, Retrieval Augmented Generation may be used.

Retrieval Augmented Generation may also be used a priori to support the language model 402. For example, one-shot or few-shot prompting may be used to support the language model 402 in generating the query. For example, the system 40 may be configured to retrieve, based on the request (e.g., using an embedding of the request), information on one or more example requests and corresponding valid queries (e.g., from a vector database), and to include the information on the one or more example requests and corresponding valid queries in the prompt for the language model 402.

While users will often formulate a direct question that relates to a single piece of information ("Which gate is the Lufthansa flight to Copenhagen"), in many cases, users benefit from additional information that is linked to the information directly being requested by the user. For example, in the case of the above question, in addition to providing the response "A 39", the user would benefit from additional information, such as information on a walking time, information on a distance, information on the estimated boarding time or gate closing time, information on whether the user needs to take an airport train to reach the gate etc. Therefore, the language model 402 may be trained or fine-tuned to output the query such, that, in addition to information directly requested by the request, the query is configured to retrieve information commonly requested alongside the information directly requested by the request. This can be done by using an appropriate query configured to retrieve information commonly requested alongside the information directly requested by the request as desired output during training and/or fine-tuning of the language model 402.

As outlined above, conversation memory/history may be used to supply the language model 402 with additional information, such as the information on the information schema or the information retrieved from additional data sources 404. Conversation memory may also be used to enable the user to ask follow-up requests, e.g., as proposed by the language model 402. Thus, as further shown in Fig. 5 ("save conversation in memory"), the system 40 may be configured to store the requests, the information retrieved from the proprietary data retrieval system 401 and the textual information on the one or more possible follow-up requests in a memory, and to include the information on previous requests, the information retrieved from the proprietary data retrieval system 401 and the textual information on the one or more possible follow-up requests as additional context in the prompt if the previous request has been issued by the same user having issued the request. For example, the system 40 may be configured to use voice fingerprinting (or similar techniques) or a timeout-based system to determine whether the request has been issued by the same user having issued the previous request.

As shown in Fig. 5, the system 40 parses the output of the language model 402, and then decides how to proceed. If the output of the language model 402 only contains a sub-query, it retrieves the respective information and appends it to the prompt (as shown by the arrow looping back after "parse model response" in Fig. 5). If it contains a query, the system 40 validates the query based on the proprietary query syntax of the proprietary data retrieval system 401 and retrieves the information from the proprietary data retrieval system 401 using the query. For example, the system 40 may include, e.g., stored in a storage device, a rulebook of the proprietary query syntax, and may parse the query to determine whether the query is valid. Alternatively, the system 40 may be configured to validate the query by querying the proprietary data retrieval system 401. If the proprietary data retrieval system 401 returns data, the validation may be deemed to have passed. If the proprietary data retrieval system 401 returns an error message in response to the query, the validation may be deemed to have failed. The system 40 may be configured to modify the prompt for the language model 402 if validation of the query fails, and repeat providing the prompt as input for the language model 402 and validating the query output using the modified prompt. For example, the system 40 may be configured to append the error message to the prompt and provide the modified prompt (with the query and the resulting error message) to the language model 402 again (as indicated by the arrow looping back after "validation/response").

Finally, the system 40 is configured to provide the response for the user having requested the information. This response may be provided via an output device, such as a display (of the self-service terminal 405, a display inside the airport/train station, e.g., at a gate or platform, a display of a computer system or mobile device being used to access the system 40, or via a web server so the response can be displayed by an arbitrary client device) or via sound (the system 40 may be configured to provide the response as spoken text, as shown in Fig. 5 by the use of the AI text-to-speech service 550). For example, the system 40 may be configured to provide a signal comprising the response to the display, self-service terminal, mobile device, computer system etc. If information has been retrieved from the proprietary data retrieval system 401, the response includes a representation of this information retrieved from the proprietary data retrieval system 401. Depending on which data is included in the information retrieved from the proprietary data retrieval system 401, a suitable representation may be generated or selected. For example, if the data included adheres to a previously known set of data (for which a pre-defined representation exists), a pre-defined representation (which may be manually pre-defined) may be used to represent the data included in the information retrieved from the proprietary data retrieval system 401. In other words, the system 40 may be configured to select a (pre-defined) representation based on the data included in the information retrieved from the proprietary data retrieval system 401, and to provide the information using the selected representation. If no such pre-defined representation exists, a pre-defined representation may be adapted, or a tabular view may be generated using the data included in the information retrieved from the proprietary data retrieval system 401. For example, if only a single row of data is included in the information retrieved from the proprietary data retrieval system 401, the entry each of the columns included in the data may be shown in a grid layout, with the column description being used as a label shown in the grid layout. If multiple rows are included, a table view may be used. As another option, in addition to the query, the language model 402 may be prompted to propose a representation of the data included in the information being retrieved from the proprietary data retrieval system 401.

The representation of the one or more possible follow-up requests, if included in the output of the language model 402, may be provided below or after (if voice output is used) the representation of the information retrieved from the proprietary data retrieval system 401.

In Fig. 5, after the voice output is provided to the user 510, the entire sequence can be iterated 1-n times during the same session, as indicated by the dashed arrow returning to the start of the sequence.

The proposed concept leverages a language model 402 that is trained or fine-tuned to output valid queries for retrieving information of the proprietary data retrieval system 401. The training or fine-tuning of such a model is detailed in the following.

Fig. 6 shows a flow chart of an example of a method for training or fine-tuning a language model 402. The method comprises obtaining 610 a plurality of training samples. Each training sample comprises a prompt as input. The prompt comprises information on a request. Each training sample comprises at least one of a corresponding query (i.e., a query being based on the request) according to a proprietary query syntax of the proprietary data retrieval system 401 and textual information about one or more possible follow-up requests as desired output (with the one or more possible follow-up requests also being based on the request). The method comprises training or fine-tuning 620 the language model 402, using the plurality of training samples, to output at least one of a query for the proprietary data retrieval system 401 according to the proprietary query syntax of the proprietary data retrieval system 401 and textual information about one or more possible follow-up requests.

For example, the method may be performed by a computer system, such as the computer system shown in connection with Fig. 4a. In other words, the system 40 of Fig. 4a may be configured to perform, in addition or as an alternative to the functional features described in connection with Fig. 4a, the method of Fig. 6.

In the following, a short introduction on machine learning and training in general is given, followed by an example of the training or fine-tuning of a language model 402.

Machine learning is a branch of artificial intelligence that involves the development of algorithms and models that allow computers to learn and make predictions or decisions without being explicitly programmed. It focuses on creating systems that can improve their performance over time by learning from data.

Training a machine-learning model, such as the language model 402, refers to the process of teaching the model to make accurate predictions or decisions. During training, the model is exposed to a large amount of data, which is used to adjust the model's internal parameters or weights. The model learns patterns, relationships, or rules from the training data, allowing it to generalize and make predictions on new, unseen data. The term fine-tuning is used if a pre-existing and trained machine learning is used as a basis, with additional training (the fine-tuning) being performed to make the machine-learning model better perform a given task.

Training data is the set of examples or instances that is used to teach a machine-learning model. It is often labeled data, meaning that each example is associated with a known outcome or desired output value. The training data comprises both input features and the corresponding output or desired output value. The model learns from this data by analyzing the patterns and relationships between the input features and the target variable. Training algorithms, such as supervised learning, semi-supervised learning, unsupervised learning, or reinforcement learning may be used for training the machine-learning model.

Machine-learning models, such as the language model 402 being trained in the present disclosure, are often implemented as Artificial Neural Networks (ANNs), and in particular Deep Neural Networks, Support Vector Machines, Decision Tree models, or Random Forest models.

Language models, such as LLMs, are typically trained using a form of unsupervised learning called self-supervised learning. During the self-supervised training, the language model is exposed to a large corpus of text data and is tasked with self-supervised learning tasks, such as tasks involving predicting the next word or sentence, or tasks involving filling in the gap in texts. Through these tasks, the model learns to encode the contextual information present in the text, and to use an attention mechanism to determine which portions of the text data are more relevant than others. After this initial training, fine-tuning, and in particular instruction tuning, is performed to make the language model (which is a foundation model at this point) perform a desired task. In other words, the model is fine-tuned to perform a given task, such as generating the query and one or more possible follow-up questions. In fine-tuning, the training is performed with a set of training data comprising training samples that do not only include the prompt, but also the desired outcome. As both the input and the desired output are used for this phase of the training, this is considered a supervised learning-based training of the language model.

The method of Fig. 6 relates to the "fine-tuning" part of the training, which may be considered part of the training of the language model 402, or which may be applied to an off-the-shelf language model, such as the language models offered by existing providers, such as OpenAI, Google, or Anthropic. Thus, the training is applied on an existing (pre-trained) foundation model, which may already by instruction-tuned for other downstream tasks. Using an existing language model has several benefits, as such models usually included vast amounts of usable information, such as an in-built conversion between airlines and their airline codes, and cities and their airport codes.

To fine-tune the language model 402 (which may or may not be considered to be part of the training), suitable training data is used, comprising an input and a corresponding desired output (as supervised learning is used). These of training samples represent domain-specific knowledge associated with the types of requests expected to be processed by the language model 402. In the present case, the samples of the training data comprise, as input, the prompt. As outlined in connection with Figs. 4a to 5, the prompt may comprise two portions - a system prompt portion (telling the language model 402 which task is to be performed) and a request-related portion (comprising the task). The desired output comprises the textual output that is expected from the language model 402. In general, this includes a) the query corresponding to the request, b) the one or more possible follow-up requests being based on the request. Both the input and the output are provided as text. To give an example, an example training sample may comprise the following text:

```
<system>
You are an AI assistant named QueryBot, an expert in generating Retrieval and Querying Syntax code for the Flight
Information Display System (FIDS) at an airport.
<human>
The airline I am flying with is Delta Airlines
<AI>
DS PL_DEPARTURE DEP; SELECT DEP.PD_DISPLAYCODE = "P" AND DEP.PD_RAL AIRLINE = "DL"; SORT
DEP.PD_SOBT ASC;"""" Would you like to know more about one of them? If so, please provide me with an identifier like
the flight number or destination.""""
```

In this example <system> denotes the start of the system prompt portion, <human> the start of the prompt (both are port of the input), and <AI> denotes the start of the desired output comprising the query (the portion in all caps), and the one or more possible follow-up questions (the portion enclosed in """" characters). For example, the software being used for fine-tuning the language model 402 may split the training sample apart into the input and the desired output, or the two portions may be provided separately. For example, algorithms such as (Q)LoRA or the tools provided by the service provider providing the language model 402 may be used for fine-tuning the language model 402.

In general, the queries being used as part of the training samples may be hand-crafted, or be generated using automatic sample generation (e.g., according to a pre-defined schema). For example, the existing business logic of the proprietary data retrieval system 401 may be used to generate the training samples. When creating the queries, care may be taken to include additional information in the query that is not directly being requested by the user. For example, for a request asking for a gate, the query may also include information about the flight departing from the gate (departure time, gate closing time, boarding time, flight destination, flight number, airline) and information about the distance of the gate from the current location. Accordingly, at least some training samples may comprise, as desired output, a query being configured to retrieve, in addition to information directly requested by the respective request, information commonly requested alongside the information directly requested by the request. Defining this information commonly requested alongside the information directly requested by the request may be a manual process. Alternatively, or additionally, the information commonly requested alongside the information directly requested by the request may be derived from the existing business logic of the proprietary data retrieval system 401.

Furthermore, as outlined in connection with Figs. 4a to 5, the desired output may further comprise c) a sub-query for retrieving information on an information schema of the proprietary data retrieval system 401 and/or d) a sub-query for retrieving information related to the request from one or more additional data sources 404. If this is the case, the language model 402 is trained or fine-tuned to output a sub-query for obtaining (i.e., retrieving) at least one of information on an information schema of the proprietary data retrieval system 401 from an information schema store 403 and information related to the request from one or more additional data sources 404 based on the request. If such sub-queries are being used, some training samples may comprise, as additional elements of the input, the sub-queries and corresponding information retrieved from the information schema store 403 or additional data source. In other words, at least a subset of the training samples may comprise information on an information schema of the proprietary data retrieval system 401 (and, optionally, a sub-query being used to retrieve the information on the information schema), e.g., from an information schema store 403, with the information on the information schema being based on the request included in the respective training sample. Similarly, at least a subset of the training samples may comprise information related to the request retrieved from one or more additional data sources (and, optionally, a sub-query being used to retrieve the information related to the request), with the information related to the request being based on the request.

In general, the definition of both input and desired output is sufficient for fine-tuning the language model 402 using supervised learning. However, in many cases, there may be more than one answer that can be considered correct. Furthermore, in some cases, an output may be extremely close to the desired output (e.g., only one word off), but convey the exact opposite of the desired output or lead to a query that is syntactically valid but retrieves the wrong information. Therefore, in addition to determining a mere proximity between the desired output and the output (e.g., a proximity between embeddings of the output and the desired output), the resulting output may be used to actually retrieve information from the proprietary data retrieval system 401, the information schema store 403 or the one or more additional data sources. This way, the resulting query can be validated (this can also be done using a static checker), and the usefulness of the resulting data can be taken into account in the fine-tuning. Thus, a loss function being used for training of fine-tuning the language model 402 may be based on at least one of the query output by the language model 402 being a valid query, the information being retrieved using the query comprising information conforming to the respective request, the information being retrieved using a sub-query being relevant for the request, and the one or more possible follow-up questions being related to the request. Some of this can be done automatically (e.g., automatic syntax validation or detecting of error messages when retrieving information), while some may be done manually (judging the usefulness of the retrieved information).

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**List of reference signs**

| | |
|---|---|
| 40 | System |
| 42 | Interface |
| 44 | Processor |
| 46 | Storage device |
| 110 | Data sources |
| 112 | Flight data |
| 114 | Building data |
| 116 | Waiting times |
| 118 | Any other |
| 120 | FIDS |
| 122 | Display system |
| 124 | Configurations by user |
| 130 | Displays |
| 210 | GUI for FIDS users |
| 220 | Gate & Check-In App for GH Agents |
| 230 | Internal Interface |
| 240 | Business intelligence |
| 250 | File storage |
| 260 | XML standard interface |
| 270 | Database |
| 280 | Real-time file interface |
| 290 | Content distribution |
| 401 | Proprietary Data Retrieval System |
| 402 | Language Model |
| 403 | Information Schema Store |
| 404 | Additional Data Source |
| 405 | Self-Service Terminal |
| 410 | Obtaining a request |
| 420 | Providing a prompt as input for a language model |
| 425 | Obtaining an output of the language model |
| 430 | Retrieving information on an information schema and/or information related to the request |
| 510 | User |
| 520 | Frontend |
| 530 | AI (Speech to Text) |
| 540 | Fine-tuned AI (Rule Generation) |
| 550 | AI (Text to Speech) |
| 560 | FIDS |
| 570 | AODB Schema Store |
| 580 | Third-party Systems |
| 610 | Obtaining training samples |

620     Training or fine-tuning a language model

**Claims**

1.  A system (40) for retrieving relevant information from a proprietary data retrieval system (401), the system (40) comprising one or more processors (44) and one or more interfaces (42), wherein the system (40) is configured to:

    obtain, via an interface, a request of a user for providing information, wherein the request is worded in natural language;

    provide a prompt as input for a language model, the prompt comprising information on the request, wherein the language model is trained or fine-tuned to output at least one of a query for the proprietary data retrieval system (401) according to a proprietary query syntax of the proprietary data retrieval system (401) and textual information about one or more possible follow-up requests,

    wherein the language model is trained or fine-tuned based on an information schema of the proprietary data retrieval system (401) and/or wherein the system (40) is configured to obtain information on the information schema based on the request and provide the information on the information schema as input for the language model;

    if the output of the language model comprises a query, validate the query based on the proprietary query syntax of the proprietary data retrieval system (401) and retrieve information from the proprietary data retrieval system (401) using the query; and

    provide a response for the user having requested the information, wherein the response comprises, depending on the output of the language model, at least one of a representation of the information retrieved from the proprietary data retrieval system (401) and a representation of the one or more possible follow-up requests.

2.  The system (40) according to claim 1, wherein the language model is trained or fine-tuned to output a sub-query for obtaining the information on the information schema based on the request and the system (40) is configured to obtain the information on the information schema of the proprietary data retrieval system (401) based on the sub-query, wherein the information on the information schema comprises a subset of the information schema, with the subset being selected by the language model according to the request.

3.  The system (40) according to claim 2, wherein the system (40) is configured to append the information on the information schema to the prompt for the language model.

4.  The system (40) according to one of the claims 1 to 3, wherein the system (40) is configured to modify the prompt for the language model if validation of the query fails, and repeat providing the prompt as input for the language model and validating the query output using the modified prompt.

5.  The system (40) according to claim 4, wherein the system (40) is configured to validate the query by querying the proprietary data retrieval system (401), with validation being deemed to have failed if the proprietary data retrieval system (401) returns an error message in response to the query, and with the system (40) being configured to modify the prompt based on the error message.

6.  The system (40) according to one of the claims 1 to 5, wherein the language model is trained or fine-tuned to output a sub-query for obtaining information related to the request from one or more additional data sources based on the request, wherein the system (40) is configured to obtain the information related to the request using the sub-query for obtaining the information related to the request, and to provide the information related to the request as input to the language model.

7.  The system (40) according to one of the claims 1 to 6, wherein the system (40) is configured to retrieve, based on the request, information on one or more example requests and corresponding valid queries, and to include the information on the one or more example requests and corresponding valid queries in the prompt for the language model, and/or wherein the system (40) is configured to store the requests, the information retrieved from the proprietary data retrieval system (401) and the textual information on the one or more possible follow-up requests in a memory, and to include the information on previous requests, the information retrieved from the proprietary data retrieval system (401) and the textual information on the one or more possible follow-up requests as additional context in the prompt if the previous request has been issued by the same user having issued the request.

8.  The system (40) according to one of the claims 1 to 7, wherein the language model is trained or fine-tuned to output the query such, that, in addition to information directly requested by the request, the query is configured to retrieve information commonly requested alongside the information directly requested by the request.

**9.** The system (40) according to one of the claims 1 to 8, wherein the proprietary data retrieval system (401) is a data retrieval system of a flight information system of an airport, wherein the system (40) is configured to process requests related to the airport.

**10.** The system (40) according to one of the claims 1 to 9, wherein the system (40) is configured to obtain the request and/or to provide the response via a self-service terminal (405), wherein optionally the system (40) is configured to include information on a location of the self-service terminal (405) in the prompt, and wherein the language model is trained or fine-tuned to output the query and/or the textual information on the one or more follow-up requests based on the location of the self-service terminal (405).

**11.** A method for retrieving relevant information from a proprietary data retrieval system (401), wherein the method comprises:

obtaining (410) a request for providing information of a user, wherein the request is worded in natural language; providing (420) a prompt as input for a language model, the prompt comprising information on the request, wherein the language model is trained or fine-tuned to output at least one of a query for the proprietary data retrieval system (401) according to a proprietary query syntax of the proprietary data retrieval system (401) and textual information about one or more possible follow-up requests, wherein the language model is trained or fine-tuned based on an information schema of the proprietary data retrieval system (401) and/or wherein information on the information schema is retrieved (430) based on the request and provided as input for the language model; if the output of the language model comprises a query, validating (440) the query based on the proprietary query syntax of the proprietary data retrieval system (401) and retrieving (445) information from the proprietary data retrieval system (401) using the query; and providing (450) a response for the user having requested the information, wherein the response comprises, depending on the output of the language model, at least one of a representation of the information retrieved from the proprietary data retrieval system (401) and a representation of the one or more possible follow-up requests.

**12.** A method for training or fine-tuning a language model, the method comprising:

obtaining (610) a plurality of training samples, with each training sample comprising a prompt as input, the prompt comprising information on a request, and at least one of a corresponding query according to a proprietary query syntax of the proprietary data retrieval system (401) and textual information about one or more possible follow-up requests as desired output, and training or fine-tuning (620) the language model, using the plurality of training samples, to output at least one of a query for the proprietary data retrieval system (401) according to the proprietary query syntax of the proprietary data retrieval system (401) and textual information about one or more possible follow-up requests.

**13.** The method according to claim 12, wherein the language model is trained or fine-tuned to output a sub-query for obtaining at least one of information on an information schema of the proprietary data retrieval system (401) from an information schema data source (403) and information related to the request from one or more additional data sources (404) based on the request.

**14.** The method according to one of the claims 12 or 13, wherein a loss function being used for training of fine-tuning the language model is based on at least one of the query output by the language model being a valid query, the information being retrieved using the query comprising information conforming to the respective request, and the one or more possible follow-up questions being related to the request.

**15.** A computer program comprising instructions which, when the program is executed by a computer, cause the computer to carry out at least one of the method of claim 11 and the method of one of the claims 12 to 14.

**Amended claims in accordance with Rule 137(2) EPC.**

**1.** A system (40) for retrieving relevant information from a proprietary data retrieval system (401), the system (40) comprising one or more processors (44) and one or more interfaces (42), wherein the system (40) is configured to:

obtain, via an interface, a request of a user for providing information, wherein the request is worded in natural language;

provide a prompt as input for a language model, the prompt comprising information on the request, wherein the language model is trained or fine-tuned to output at least one of a query for the proprietary data retrieval system (401) according to a proprietary query syntax of the proprietary data retrieval system (401) and textual information about one or more possible follow-up requests,

wherein the language model is trained or fine-tuned based on an information schema of the proprietary data retrieval system (401) and/or wherein the system (40) is configured to obtain information on the information schema based on the request and provide the information on the information schema as input for the language model;

if the output of the language model comprises a query, validate the query based on the proprietary query syntax of the proprietary data retrieval system (401) and retrieve information from the proprietary data retrieval system (401) using the query; and

provide a response for the user having requested the information, wherein the response comprises, depending on whether the output of the language model comprises the one or more possible follow-up requests, at least one of a representation of the information retrieved from the proprietary data retrieval system (401) and a representation of the one or more possible follow-up requests.

2. The system (40) according to claim 1, wherein the language model is trained or fine-tuned to output a sub-query for obtaining the information on the information schema based on the request and the system (40) is configured to obtain the information on the information schema of the proprietary data retrieval system (401) based on the sub-query, wherein the information on the information schema comprises a subset of the information schema, with the subset being selected by the language model according to the request.

3. The system (40) according to claim 2, wherein the system (40) is configured to append the information on the information schema to the prompt for the language model.

4. The system (40) according to one of the claims 1 to 3, wherein the system (40) is configured to modify the prompt for the language model if validation of the query fails, and repeat providing the prompt as input for the language model and validating the query output using the modified prompt.

5. The system (40) according to claim 4, wherein the system (40) is configured to validate the query by querying the proprietary data retrieval system (401), with validation being deemed to have failed if the proprietary data retrieval system (401) returns an error message in response to the query, and with the system (40) being configured to modify the prompt based on the error message.

6. The system (40) according to one of the claims 1 to 5, wherein the language model is trained or fine-tuned to output a sub-query for obtaining information related to the request from one or more additional data sources based on the request, wherein the system (40) is configured to obtain the information related to the request using the sub-query for obtaining the information related to the request, and to provide the information related to the request as input to the language model.

7. The system (40) according to one of the claims 1 to 6, wherein the system (40) is configured to retrieve, based on the request, information on one or more example requests and corresponding valid queries, and to include the information on the one or more example requests and corresponding valid queries in the prompt for the language model, and/or wherein the system (40) is configured to store the requests, the information retrieved from the proprietary data retrieval system (401) and the textual information on the one or more possible follow-up requests in a memory, and to include the information on previous requests, the information retrieved from the proprietary data retrieval system (401) and the textual information on the one or more possible follow-up requests as additional context in the prompt if the previous request has been issued by the same user having issued the request.

8. The system (40) according to one of the claims 1 to 7, wherein the language model is trained or fine-tuned to output the query such, that, in addition to information directly requested by the request, the query is configured to retrieve information commonly requested alongside the information directly requested by the request.

9. The system (40) according to one of the claims 1 to 8, wherein the proprietary data retrieval system (401) is a data retrieval system of a flight information system of an airport, wherein the system (40) is configured to process requests related to the airport.

10. The system (40) according to one of the claims 1 to 9, wherein the system (40) is configured to obtain the request and/or to provide the response via a self-service terminal (405), wherein optionally the system (40) is configured to include information on a location of the self-service terminal (405) in the prompt, and wherein the language model is trained or fine-tuned to output the query and/or the textual information on the one or more follow-up requests based on the location of the self-service terminal (405).

11. A method for retrieving relevant information from a proprietary data retrieval system (401), wherein the method comprises:

obtaining (410) a request for providing information of a user, wherein the request is worded in natural language;
providing (420) a prompt as input for a language model, the prompt comprising information on the request, wherein the language model is trained or fine-tuned to output at least one of a query for the proprietary data retrieval system (401) according to a proprietary query syntax of the proprietary data retrieval system (401) and textual information about one or more possible follow-up requests,
wherein the language model is trained or fine-tuned based on an information schema of the proprietary data retrieval system (401) and/or wherein information on the information schema is retrieved (430) based on the request and provided as input for the language model;
if the output of the language model comprises a query, validating (440) the query based on the proprietary query syntax of the proprietary data retrieval system (401) and retrieving (445) information from the proprietary data retrieval system (401) using the query; and
providing (450) a response for the user having requested the information, wherein the response comprises, depending on whether the output of the language model comprises the one or more possible follow-up requests, at least one of a representation of the information retrieved from the proprietary data retrieval system (401) and a representation of the one or more possible follow-up requests.

12. A method for training or fine-tuning a language model, the method comprising:

obtaining (610) a plurality of training samples, with each training sample comprising a prompt as input, the prompt comprising information on a request, and a corresponding query according to a proprietary query syntax of the proprietary data retrieval system (401) and textual information about one or more possible follow-up requests as desired output, and
training or fine-tuning (620) the language model, using the plurality of training samples, to output a query for the proprietary data retrieval system (401) according to the proprietary query syntax of the proprietary data retrieval system (401) and textual information about one or more possible follow-up requests.

13. The method according to claim 12, wherein the language model is trained or fine-tuned to output a sub-query for obtaining at least one of information on an information schema of the proprietary data retrieval system (401) from an information schema data source (403) and information related to the request from one or more additional data sources (404) based on the request.

14. The method according to one of the claims 12 or 13, wherein a loss function being used for training of fine-tuning the language model is based on at least one of the query output by the language model being a valid query, the information being retrieved using the query comprising information conforming to the respective request, and the one or more possible follow-up questions being related to the request.

15. A computer program comprising instructions which, when the program is executed by a computer, cause the computer to carry out at least one of the method of claim 11 and the method of one of the claims 12 to 14.

**Datasources**

Flight Data — 112

Building Data — 114

Waiting times — 116

Any other — 118

110

120

**FIDS** — 122

Display System

**Configurations by User**
Add own Data sources if needed
Use any Datafiled to connect the dots
Unrestricted and flexible for the user

124

**Display Devices** — 130

Displays

Example :
„Show Gate Info on this screen at
((SOBT -30 ) + Walking Time from Spot to
Gate + Waiting Times
+/ - Aircraft Type offset (e.g. 747 or Embraer
175)
+ addtional Time becasue it is a BUS Gate
+ …+…. (add any optional parameter you
require )

**Fig. 1**

EP 4 682 736 A1

Fig. 2

| SQL | FIDS Querylanguage |
|---|---|
| SELECT * | DS |
| FROM FLIGHT Flug_1 | FLIGHT Flug_1, AIRPORT fh; |
| LEFT JOIN | JOIN |
| AIRPORT fh ON | Flug_1.ORGDESTAIRPORT = fh.IATA3LC |
| Flug_1.ORGDESTAIRPORT = fh.IATA3LC | OUTER |
| WHERE | WHERE |
| Flug_1.INBOUNTINDICATOR = 'D' | Flug_1.INBOUNTINDICATOR = 'D'; |
| AND SYSDATE < Flug_1.STT | |
| | SELECT |
| | SYSDATE < Flug_1.STT; |
| ORDER BY | |
| Flug_1.STT ASC; | SORT |
| | Flug_1.STT ASC; |

# Fig. 3

**Fig. 4a**

**Fig. 4b**

**Fig. 6**

**Fig. 5**

Europäisches
Patentamt

European
Patent Office

Office européen
des brevets

# EUROPEAN SEARCH REPORT

**Application Number**

EP 24 18 9151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHUNXI GUO ET AL: "Prompting GPT-3.5 for Text-to-SQL with De-semanticization and Skeleton Retrieval", ARXIV.ORG, CORNELL UNIVERSITY LIBRARY, 201 OLIN LIBRARY CORNELL UNIVERSITY ITHACA, NY 14853, 31 August 2023 (2023-08-31), XP091600859, * abstract; figure 2 * * Section 3 * | 1-15 | INV. G06F16/242 G06F16/2452 |
| X | KEZHI KONG ET AL: "OpenTab: Advancing Large Language Models as Open-domain Table Reasoners", ARXIV.ORG, CORNELL UNIVERSITY LIBRARY, 201 OLIN LIBRARY CORNELL UNIVERSITY ITHACA, NY 14853, 12 April 2024 (2024-04-12), XP091727215, * abstract; figures 1,3,5,6 * * Sections 2, 3 * * Annex A.4 * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 23 December 2024 | Wienold, Norbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)